# EUROPÄISCHE PATENTSCHRIFT

(11) **EP 0 997 077 B1**
(45) Veröffentlichungstag und Bekanntmachung des Hinweises auf die Patenterteilung: **30.03.2005**
(21) Anmeldenummer: 99120044.5
(22) Anmeldetag: 18.10.1999
(51) Int. Cl.: A23G 1/18, A23G 1/12, F28D 9/04, F28D 7/04

(54) **Vorrichtung zum kontinuierlichen Temperieren von zu verarbeitenden kakaobutterhaltigen oder ähnlichen fetthaltigen Massen**
Apparatus for continuous tempering of cocoa-butter or like fat containing mass to be processed
Appareil pour le conditionnement thermique continu de masses au beurre de cacao ou autre graisse analogues en vue de leur mise en oeuvre

(30) Priorität: 24.10.1998 DE 19849099
(43) Veröffentlichungstag der Anmeldung: 03.05.2000
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- EP-A- 0 654 222
- EP-A- 0 872 187
- DD-A- 227 223
- DE-A- 3 411 523
- GB-A- 644 312
- US-A- 4 445 569
- US-A- 4 859 483
- US-A- 5 188 853
- PATENT ABSTRACTS OF JAPAN vol. 011, no. 168 (M-594), 29. Mai 1987 (1987-05-29) & JP 62 000795 A (AGENCY OF IND SCIENCE & TECHNOL;OTHERS: 01), 6. Januar 1987 (1987-01-06)

## Beschreibung

Die Erfindung betrifft eine Vorrichtung zum kontinuierlichen Temperieren von zu verarbeitenden kakaobutterhaltigen oder ähnlichen fetthaltigen Massen, insbesondere Schokoladenmasse, mit einer Temperiersäule, die mehrere, einen Zylinder bildende, übereinander angeordnete Kammern aufweist, von denen mindestens eine an einen Kreislauf für ein Temperiermedium angeschlossen ist und in dieser Kammer zwischen einem außen an der Kammer angeordneten Eingang und einem außen an der Kammer angeordneten Ausgang durch eine Trennwand ein Strömungspfad für das Temperiermedium gebildet ist, der mit einem von außen nach innen verlaufenden ersten Abschnitt des Strömungspfades einen Vorlauf und mit einem von innen nach außen verlaufenden weiteren Abschnitt des Strömungspfades einen Rücklauf bildet. Die Erfindung lässt sich insbesondere im Bereich einer oder mehrerer Kühlkammern anwenden, die von einem Kühlmedium durchströmt werden. Andererseits lässt sich die Erfindung aber auch in jeder anderen Zone oder jeder anderen Etage einer Temperiersäule anwenden, beispielsweise einer Kristallisationszone oder einer Wärmezone. Jede Kammer bildet einen scheibenartigen Hohlkörper, der bis auf einen Eingang und einen Ausgang, die an den Temperierkreislauf angeschlossen sind, geschlossen ausgebildet ist und dessen Innenraum durch eine Trennwand, die aus mehreren Abschnitten bestehen kann, so unterteilt ist, dass ein Strömungspfad für das Temperiermedium in mehr oder weniger eindeutiger Weise geschaffen ist.

Eine Vorrichtung der eingangs beschriebenen Art ist aus der EP 0 654 222 B1 bekannt. Die Vorrichtung weist eine Vielzahl von Kammern auf, die teilweise, d. h. gruppenweise von einem Kühlmedium oder einem Temperiermedium durchströmt werden. Zwischen je zwei benachbarten Kammern, die von einem oder mehreren Kreisläufen durchströmt werden, ist jeweils eine Massekammer angeordnet, durch die die zu temperierende Masse mit Hilfe einer Pumpe hindurchgefördert wird. Fig. 3 dieser Druckschrift lässt den grundsätzlichen Aufbau der Kammer mit der Trennwand erkennen. Die Trennwand besteht aus mehreren Abschnitten, die teilweise kreisbogenförmig, teilweise radial zu der Achse der Temperiersäule und bilden insgesamt eine Art Labyrinth bzw. einen definierten Strömungspfad für das Temperiermedium, dessen Anfang mit einem Eingang und dessen Ende mit einem Ausgang versehen ist, die beide beispielsweise in Form von Stutzen außen an der Kammer vorgesehen sind. Der Strömungspfad erhält so eine eingängige kreisbogenartige Form. Für die Zwecke der vorliegenden Erfindung mag dieser Strömungspfad gedanklich in einen Vorlauf und einen Rücklauf unterteilt sein, die freilich direkt aneinander anschließen bzw. ineinander übergehen. Wenn man den Abschnitt des Strömungspfades, der von außen nach innen verläuft, also radial nach innen auf die Achse der Temperiersäule zu, als Vorlauf und den Abschnitt des Strömungspfades, der von innen nach außen verläuft, als Rücklauf bezeichnet, dann erkennt man, dass der Vorlauf wegmäßig erheblich kürzer als der Rücklauf ausgebildet ist. Diese Tatsache allein ist an sich noch nicht nachteilig, weil das Temperiermedium entlang des gesamten Strömungspfades an sich nur die Aufgabe hat, die Masse zu temperieren, also zu kühlen oder zu erwärmen. Man erkennt jedoch anhand des dargestellten Verlaufes des Strömungspfades bzw. der Abschnitte der Trennwand, dass der Strömungspfad über insgesamt vier Umlenkungen verfügt, an denen er seine Richtung um 180° ändert. Jede dieser Umlenkungen verursacht einen nachteiligen Druckverlust des Temperiermediums, der letztlich von der Pumpe, die das Temperiermedium antreibt, aufgebracht werden muss. Man erkennt weiterhin anhand des Verlaufes des Strömungspfades, dass der Durchströmquerschnitt in einigen Abschnitten zwar vorteilhaft konstant bleibt, sich aber in den Bereichen der vier Umlenkungen erheblich verändert. Jede solche Querschnittsänderung ist mit einer Geschwindigkeitsänderung des Temperiermediums an der betreffenden Stelle verbunden, so dass sich hier nachteilige Änderungen im Wärmeübergang nicht vermeiden lassen. Auch entstehen an den verschiedensten Stellen des Strömungspfades, insbesondere im Bereich der Umlenkungen, aber auch im Bereich des Eingangs und des Ausgangs tote Zonen, in denen das Temperiermedium nur bedingt strömt, so dass sich bei Langzeitgebrauch der Vorrichtung hier Ablagerungen bilden, die zwar den Strömungspfad nicht besonders nachteilig beeinflussen, aber Bereiche der beiden Scheibenoberflächen der Kammer erfassen und sich hier durch unterschiedliche Temperierung negativ bemerkbar machen. Wenn beispielsweise die Kammer als Kühlkammer an einen Kühlkreislauf angeschlossen ist, bilden sich in diesen toten Zonen Flächenbereiche, in denen die der Masse zugekehrten Kühlflächen örtlich eine vergleichsweise höhere Temperatur annehmen, als es für die Kühlung der Masse sinnvoll oder gar erforderlich ist. Bekanntlich ist beim Vorkristallisieren von Schokolademasse in einer Kühl- oder Kristallisierzone eine Kühlflächentemperatur erforderlich, die in engen Grenzen gehalten werden muss. Wenn dann, wie hier, innerhalb der der Masse zugekehrten Kühlfläche zu hoch temperierte Flächenbereiche entstehen, tragen diese Flächenbereiche zur Bildung von Kristallen nichts mehr bei. In solchen toten Zonen ergibt sich keine positive Wirkung auf die Masse. Solche toten Zonen im Bereich der Kühlflächen können Werte in der Größenordnung von 10 bis 20 % und mehr der gesamten Kühlfläche ausmachen, die dann für die gewünschte Temperierung nutzlos bzw. verloren sind.

Ein weiterer Nachteil der bekannten Kammer mit dem durch die Anordnung der Trennwand sich ergebenden Strömungspfad ist darin zu sehen, dass selbst dort, wo das Temperiermedium strömt, örtlich gesehen unterschiedliche Temperaturen der der Masse zugekehrten Kühlflächen resultieren. Im Falle der Verwendung eines Kühlmediums als Temperiermedium weist dieses am Eingang in die Kammer die niedrigste Temperatur auf. Das Temperiermedium nimmt entlang des Strömungspfades entsprechend dem Vorlauf und dem sich anschließenden Rücklauf kontinuierlich Wärme aus der zu kühlenden Masse auf und erhöht damit zunehmend seine Temperatur, so dass es am Ausgang mit der höchsten Temperatur austritt. Aufgrund der Ausbildung des Strömungspfades ist somit davon auszugehen, dass bei dem kurzen Vorlauf sich radial gesehen innen die kälteste Temperatur der Kühlfläche auf einem kreisartigen Abschnitt des Strömungspfades einstellen wird, wobei weitere Abschnitte des dann den Rücklauf bildenden Strömungspfades diesen kreisförmigen Abschnitt nach außen jeweils umgeben, in welchem das Kühlmedium eine jeweils höhere Temperatur annimmt. Dies bedeutet, dass die der Masse zugekehrten Kühlflächen innen, also auf kleinem Radius, niedriger temperiert sind als außen, also auf großem Radius. Diese grundsätzliche Anordnung wird noch durch das radial gerichtete Stück des Vorlaufes gestört bzw. unterbrochen. Es ist also grundsätzlich mit dieser Anordnung der Abschnitte der Trennwand und der Bildung des daraus resultierenden Strömungspfades nicht möglich, die der Masse zugekehrte Kühlfläche über die gesamte Kühlfläche gleichmäßig und optimal zu temperieren, wie es beispielsweise für eine Kristallbildung erwünscht ist.

Ein weiteres Problem des Wärmeübergangs ergibt sich aus der Art der Strömung des Temperiermediums. Es ist bekannt, dass turbulente Strömungsverhältnisse einen sehr viel besseren Wärmeübergang nach sich ziehen als laminare Strömungsverhältnisse. Geht man von einer gegebenen Pumpe mit feststehender Leistung für das Temperiermedium aus, so wird man in den Bereich großer Strömungsgeschwindigkeiten und damit der turbulenten Strömung nur dann gelangen, wenn man die prinzipielle Anordnung der Trennwand vervielfacht, um kleine Durchströmquerschnitte zu erhalten. Auf diese Weise lässt sich zwar die Strömungsgeschwindigkeit entlang des Strömungspfades steigern. In nachteiliger Weise erhöht sich dabei aber zwangsläufig die Zahl der Umlenkungen, woraus ein erhöhter Druckverlust resultiert, der wiederum durch die Pumpe ausgeglichen werden muss. Diesem Druckverlust könnte man dadurch begegnen, Pumpen mit vergleichsweise größerer Leistung im Temperierkreislauf zu benutzen. Aber auch hier sind Grenzen gesetzt, insbesondere wenn man bedenkt, dass es durchaus nicht ungewöhnlich ist, mehrere solche Kammern innerhalb einer Temperiersäule durch ein und denselben Temperierkreislauf miteinander zu verbinden und das Temperiermedium nacheinander durch eine Mehrzahl von Kammern zu schicken.

Die GB-A-644 312 beschreibt eine Vorrichtung zum Temperieren von fetthaltigen Masse üblichen Aufbaus. Das Temperiermedium wird einer Kammer über einen außenliegenden Eingang und einen außen an der Kammer angeordneten Ausgang zugeführt. Die Kammer ist durch eine scheibenartige Unterteilungswand in eine obere und eine untere Teilkammer unterteilt. In jeder dieser Teilkammern ist eine aus einem Abschnitt bestehende Trennwand spiralartig angeordnet. Der Strömungspfad in jeder Teilkammer erhält so eine eingängige spiralartige Form. Der Strömungspfad der einen Teilkammer kann als Vorlauf und der Strömungspfad der anderen Teilkammer als Rücklauf bezeichnet werden. Der Vorlauf bestimmt die Oberflächentemperatur der Wand, der einer Massekammer zugekehrt ist. Der Rücklauf bestimmt die Oberflächentemperatur der Wand, die der benachbarten Massekammer zugekehrt ist. Die der Massekammer zugekehrte Oberfläche besitzt jeweils radial und umfangsmäßig gesehen unterschiedliche Temperaturen. Die der Masse zugekehrten Flächen der Teilkammern werden also mit einer ungleichmäßigen Temperatur über die Fläche temperiert.

Die DD-A-227 223 beschreibt das Temperieren eines feststehenden Bauteils mit einer einzelnen Temperierkammer beim Fotolithografieprozess.

Andererseits ist es aus der DE 40 27 429 C2 bekannt, dass optimale Kristallbildungen bei solchen Temperiermaschinen dann erzielbar sind, wenn die Temperatur der der Masse zugekehrten Kühlflächen solcher Kühlkammern konstant gehalten wird. Dies bezieht sich auf die gesamte Fläche, also auf jede örtliche Stelle dieser Fläche.

Der Erfindung liegt die Aufgabe zugrunde, eine Vorrichtung der eingangs beschriebenen Art bereitzustellen, die Kammern aufweist, deren der Masse zugekehrte Flächen mit einer gleichmäßigen Temperatur über die Fläche temperiert werden.

Erfindungsgemäß wird dies bei einer Vorrichtung der eingangs beschriebenen Art dadurch erreicht, dass die Trennwand in der Kammer so angeordnet ist, dass der Strömungspfad eine zweigängige spiralartige Form erhält und die Abschnitte des Vorlaufes und des Rücklaufes des Strömungspfades jeweils unmittelbar nebeneinander über die Fläche der Kammer verteilt angeordnet sind.

Die Erfindung geht theoretisch von dem Gedanken aus, die Trennwand zweigängig spiralartig anzuordnen und somit den zwischen den Abschnitten der Trennwand gebildeten Strömungspfad mit spiralartiger Form zu gestalten, sodass die eine Spirale für den Vorlauf und die andere Spirale für den Rücklauf nutzbar ist. In der einfachsten Form wird damit eine zweigängige Einfachspirale gebildet, die unabhängig von der Gestaltung der Durchströmfläche des Strömungspfades nur eine einzige Umlenkung aufweist. Da der Eingang und der Ausgang, also der Anfang und das Ende des Strömungspfades, außen an der Kammer angeordnet sind, befindet sich die einzige Umlenkung vergleichsweise innen. Die Anzahl der Umlenkungen verändert sich auch dann nicht, wenn der Durchströmquerschnitt verändert wird. Das Prinzip der erfindungsgemäßen Ausbildung des Strömungspfades kann am einfachsten verstanden werden, wenn man sich einen Wasserschlauch vorstellt, dessen eines Ende den Eingang und dessen anderes Ende den Ausgang bildet. Legt man einen solchen Wasserschlauch U-förmig aus, dann erkennt man, dass es nur eine einzige Umlenkung gibt, an der sich die Strömungsrichtung des Mediums im Strömungspfad um 180° ändert. Wenn man einen solchen Wasserschlauch dann spiralförmig aufwickelt und die Wandungen des Wasserschlauches in eine Trennwand umgestaltet, dann erkennt man die prinzipielle spiralartige Anordnung der Trennwand in der Kammer nach dem Prinzip der vorliegenden Erfindung. Anhand des aufgezeigten Bildes kann man sich leicht vorstellen, dass sich im Bereich der einzigen Umlenkung eine Symmetrieebene befinden könnte, die also die insoweit spiegelsymmetrische Anordnung des Vorlaufes zu dem Rücklauf erkennen lässt. Man erkennt zugleich, dass infolge des spiralartigen Aufwickelns spiegelsymmetrische Abschnitte des Vorlaufes und des Rücklaufes in der Kammer unmittelbar benachbart nebeneinander plaziert werden. Dies bedeutet beispielsweise, dass der Beginn des Vorlaufes unmittelbar benachbart zu dem Ende des Rücklaufes angeordnet ist, wodurch hinsichtlich der Flächenbereiche, die diesbezüglich mit der Masse in Kontakt kommen, ein Temperaturausgleich zwischen der niedrigsten Temperatur und der höchsten Temperatur des Kühlmediums dieser Abschnitte stattfindet. Ebenso verhält es sich mit entsprechenden anderen spiegelsymmetrisch im Bereich des Vorlaufes und Rücklaufes gebildeten und angeordneten Abschnitten. Die Temperatur des Kühlmediums in den jeweils betrachteten spiegelsymmetrischen Abschnitten kann zwar zueinander eine unterschiedlich große Differenz aufweisen. Der Mittelwert stimmt jedoch in allen jeweils betrachteten Abschnitten überein, woraus eine gleichmäßige Temperierung der der Masse zugekehrten Temperierfläche über deren flächenmäßige Erstreckung gesehen resultiert.

Die erfindungsgemäße Ausbildung des Strömungspfades durch die Gestaltung und Anordnung der Trennwand in der Kammer hat einen weiteren bedeutsamen Vorteil. Bei der Bildung von Kristallen im Rahmen der Vorkristallisation einer solchen Temperiermaschine ist es bekannt, dass es eine kritische Kühlmitteltemperatur gibt, also eine Temperatur, bei der eine Kristallbildung noch einsetzt bzw. stattfindet. Wird diese kritische Temperatur bereichsweise überschritten, so ist die entsprechende Fläche für die Kristallbildung nutzlos bzw. verloren. Dem kann man bei der Ausbildung des Strömungspfades gemäß Stand der Technik nur dadurch begegnen, dass man dafür sorgt, dass selbst die höchste Temperatur am Ende des Rücklaufes des Strömungspfades noch unterhalb dieser kritischen Wassertemperatur liegt. Dies bedeutet aber gleichzeitig, dass das Kühlmedium am Eingang in die Kammer eine entsprechend niedrigere Temperatur aufweisen muss. Im Stand der Technik wird mit einer Eingangstemperatur des Kühlmediums in eine Kühlkammer in der Größenordnung von 18 °C oder darunter gearbeitet. Bei der erfindungsgemäßen Ausbildung des Strömungspfades, bei der die Temperatur der der Masse zugekehrten Kühlfläche über die Fläche und über den Radius konstant bleibt, kann man mit Eingangstemperaturen bis zu 22 °C arbeiten. Die Eingangstemperatur des Kühlmediums kann also vergleichsweise 5 °C bis 6 °C höher liegen als im Stand der Technik. Hieraus und aus der besseren Nutzung der Kühlfläche mit konstanter Temperatur wird die Vorrichtung auch im Teillastbereich mit größerer Sicherheit nutzbar. Ein solcher Teillastbereich liegt beispielsweise dann vor, wenn eine auf einen bestimmten 100 %igen Massedurchsatz berechnete und dimensionierte Vorrichtung plötzlich mit einem verringerten Massedurchsatz gefahren werden muss, weil dies beispielsweise das zu überziehende Produkt verlangt oder sonstige Besonderheiten zu überbrücken sind. Die erfindungsgemäße Ausbildung des Strömungspfades macht eine solche Temperiermaschine teillaststabiler.

Die beiden Abschnitte des den Vorlauf und den Rücklauf bildenden Strömungspfades sind zumindest etwa gleich lang ausgebildet. Bei dieser Ausführungsform sind der Eingang und der Ausgang nahe beieinander angeordnet, und die Temperatur der mit der Masse in Kontakt kommenden Fläche ist über Radius und Umfang konstant. Tote Ecken und ungleichmäßig temperierte Flächenbereiche werden vermieden.

Die spiralartig verlaufende Trennwand der Kammer können unter Bildung einer weitgehend konstanten Durchströmfläche für das Temperiermedium im Vorlauf und im Rücklauf über die Fläche der Kammer verteilt zwischen Eingang und Ausgang angeordnet sein. Die sich senkrecht zum Strömungspfad erstreckende Durchströmfläche kann ohne weiteres über die Länge des Durchströmpfades, also über Vorlauf und Rücklauf, konstant ausgebildet sein. Der Strömungspfad kann von außen nach innen regelmäßig angeordnet sein, wobei sich lediglich die Anordnung des Eingangs und des Ausgangs konstruktiv auswirken. Die Geschwindigkeit des Temperiermediums an allen Stellen des Strömungspfades ist damit gleich hoch, so dass eine turbulente Strömung an allen Stellen der Fläche leicht verwirklicht werden kann. Es ist andererseits aber auch möglich, den Durchströmpfad mit unterschiedlichen Durchströmflächen für einzelne Abschnitte des Strömungspfades zu versehen, beispielsweise um den Einfluss von unterschiedlichen Bewegungsgeschwindigkeiten der Masse in der Massekammer zu kompensieren.

Eine besonders einfache Ausführungsform besteht darin, dass die Trennwand unter Bildung einer zweigängigen Einfachspirale mit einer einzigen innen angeordneten Umlenkung über die Fläche der Kammer verteilt angeordnet sind. Um die Anzahl der Umlenkungen minimal zu halten, wird diese Ausführungsform bevorzugt. Der Druckverlust ist minimal. Die mit der Masse in Kontakt kommende Fläche wird 100%ig ausgenutzt, und abweichend temperierte Flächenbereiche werden vermieden.

Es ist aber auch möglich, dass die Trennwand unter Bildung einer Doppelspirale mit zwei innen angeordneten Umlenkungen über die Fläche der Kammer verteilt angeordnet ist. Bei dieser Ausführungsform schließen ein Vorlauf an einen Rücklauf, dann wieder ein Vorlauf und an einen Rücklauf nacheinander an. Jeder Vorlauf und jeder Rücklauf nimmt etwa ein Viertel der Gesamtlänge des Strömungspfades ein. Der erste Rücklauf kann mit dem zweiten Vorlauf innerhalb der Kammer verbunden sein, so dass sich außen an der Kammer nur ein Eingang und ein Ausgang ergeben. Es ist aber auch möglich, die Verbindung außerhalb der Kammer herzustellen oder das Temperiermedium eingangsseitig auf die beiden Vorläufe aufzuteilen und am Ende der beiden Rückläufe wieder zu dem Kreislauf zusammenzufassen. Bei dieser Ausführungsform ergeben sich nur zwei Umlenkungen im Innern der Kammer.

Für die Ausbildung der Trennwand innerhalb der Kammer ergeben sich verschiedene Möglichkeiten. In der Regel erstreckt sich die Trennwand senkrecht zu der flächen- bzw. scheibenartigen Kammer. Die Trennwand ist mit einer der Kammerwandungen dauerhaft verbunden und bildet mit der anderen Kammerwandung eine weitgehend dichte Anlage. Die Trennwand selbst kann als eine gerundet oder polygonartig verlaufende Wandung ausgebildet sein. Insbesondere besteht die Möglichkeit, dass die Trennwand eine Vielzahl von kreisbogenartig um die Achse der Temperiersäule verlaufende Wandungsabschnitte aufweist. Damit besteht der Strömungspfad aus Abschnitten, die sich kreisbogenförmig um die Achse der Temperiersäule erstrecken. Lediglich an der Übergangsstelle von einem Radius zu dem anderen findet eine Anpassung in der Anordnung der betreffenden Wandungsabschnitte statt. Die Trennwand kann so angeordnet sein, dass die Krümmung des Vorlaufes und die Krümmung des Rücklaufes abschnittweise im wesentlichen konstant bleiben und nur durch die Anordnung des Eingangs und des Ausgangs gestört sind.

Zweckmäßig ist es, wenn der Eingang und der Ausgang zu der Kammer benachbart zueinander angeordnet sind. Dies vereinfacht die Verrohrung des Kreislaufes des Temperiermediums außerhalb der Kammer, insbesondere dann, wenn das Temperiermedium eines Kreislaufes durch mehrere übereinander angeordnete Kammern nacheinander geschickt wird.

Die Erfindung wird anhand bevorzugter Ausführungsbeispiele weiter erläutert und beschrieben. Es zeigen:
- Fig. 1: eine Temperiersäule in beispielhafter Ausführungsform,
- Fig. 2: einen Schnitt gemäß der Linie II - II durch eine Kühlkammer in einer ersten Ausführungsform,
- Fig. 3: eine ähnliche Darstellung wie Fig. 2 an einer zweiten Ausführungsform,
- Fig. 4: eine weitere ähnliche Darstellung einer dritten Ausführungsform und
- Fig. 5: eine ähnliche Schnittdarstellung bei einer weiteren Ausführungsform.

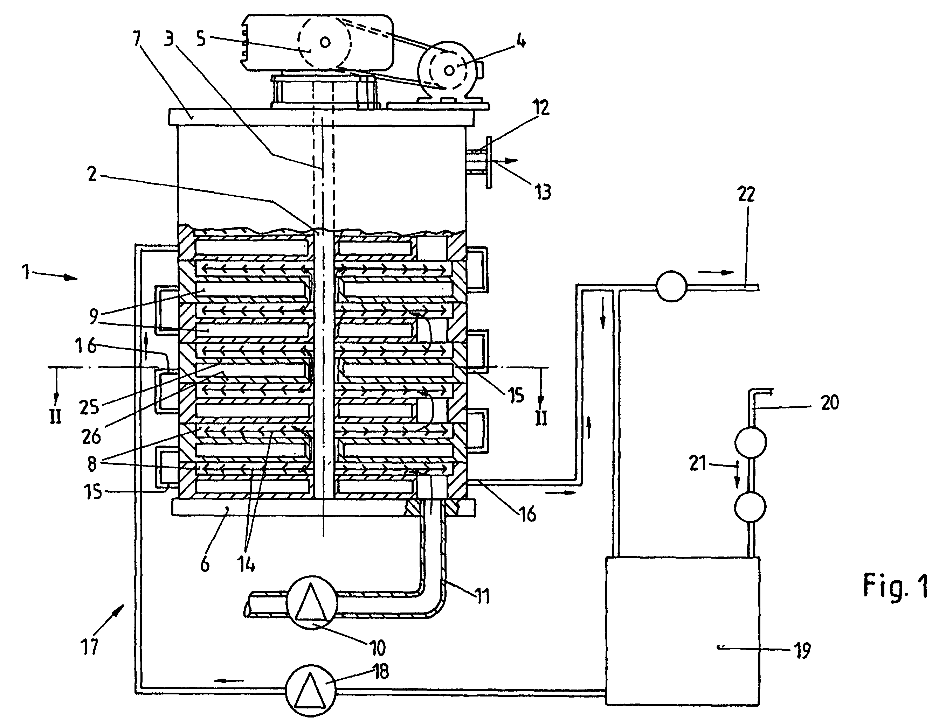

In Fig. 1 ist eine Temperiersäule 1 schematisch dargestellt, die im wesentlichen zylindrische Gestalt besitzt. Die Temperiersäule 1 ist aus einzelnen Scheiben aufgebaut. Die Scheiben sind von einer Antriebswelle 2 mit vertikaler Achse 3 durchsetzt. Die Antriebswelle 2 wird von einem Motor 4 über ein Getriebe 5 angetrieben. Zwischen einer Bodenplatte 6 und einer Deckplatte 7 sind abwechselnd von der zu temperierenden Masse durchströmte Massekammern 8 sowie Kammern 9 angeordnet, die von einem Temperiermedium durchströmt werden. Die zu temperierende Masse wird mit Hilfe einer Pumpe 10 über eine Leitung 11 in die unterste Massekammer eingebracht. Die Masse bewegt sich in der untersten Massekammer 8 im wesentlichen radial von außen nach innen und tritt durch einen radial innen angeordneten Durchtritt in die nächste nach oben folgende Massekammer 8 über. Die einzelnen Massekammern 8 weisen die Übertritte für die Masse jeweils abwechselnd auf einem Radius relativ weit außen und dann wiederum in der Nähe der Antriebswelle 2 auf. Auf diese Art und Weise gelangt die Masse von unten nach oben durch die Temperiersäule 1 hindurch. Die Masse durchfließt dabei eine Vielzahl von Massekammern und tritt schließlich am Masseauslaß 12 gemäß Pfeil 13 aus. In den Massekammern können Rührwerkzeuge 14, sogenannte Abstreifer, vorgesehen sein, die hier nur schematisch angedeutet sind.

Jede Kammer 9, die von einem Temperiermedium durchflossen wird, besitzt einen Eingang 15 und einen Ausgang 16, die hier schematisch angedeutet sind. In der Regel ist der Eingang 15 und der Ausgang 16 an jeder Kammer 9 relativ benachbart zueinander angeordnet, um die Leitungsverbindungen zu vereinfachen. Mit Hilfe der Eingänge 15 und der Ausgänge 16 ist ein Kreislauf 17 an die Kammern 9 angeschlossen bzw. durch die Kammern 9 hindurchgeführt. Der Kreislauf 17 wird über eine Pumpe 18 angetrieben, entnimmt ein Temperiermedium, in der Regel Wasser aus einem Mischbehälter 19 und führt dieses im Gegenstrom, also entgegen der Fließrichtung der Masse, durch die Kammern 9 von oben nach unten an der Temperiersäule 1. Der Mischbehälter 19 wird über eine Leitung 20 des Pfeil 21 mit Frischwasser versorgt. In der der Leitung 20 sind entsprechende Ventile vorgesehen. Überschüssiges Wasser wird über eine Leitung 22 aus dem Kreislauf 17 herausgeführt. Es ist hier zur vereinfachten Darstellung nur ein einziger Kreislauf 17 dargestellt, obwohl es üblich und erforderlich ist, innerhalb des Aufbaus der Temperiersäule 1 aus den verschiedenen Scheiben mehrere Zonen zu bilden, und diese Zonen an jeweils eigene Kreisläufe anzuschließen. Jede Zone kann aus einer oder mehreren Kammern 9 bestehen. So ist es für die Temperierung von Schokolade beispielsweise bekannt, im unteren Bereich der Temperiersäule 1 eine Kühlzone, im mittleren Bereich eine Kristallisierzone und im oberen Bereich eine Nachwärmzone zu schaffen. In diesem Fall sind dann drei entsprechend unterschiedlich temperierte Kreisläufe für Temperiermedium vorgesehen, die aber grundsätzlich so aufgebaut sein können, wie dies anhand des Kreislaufes 17 dargestellt und beschrieben worden ist.

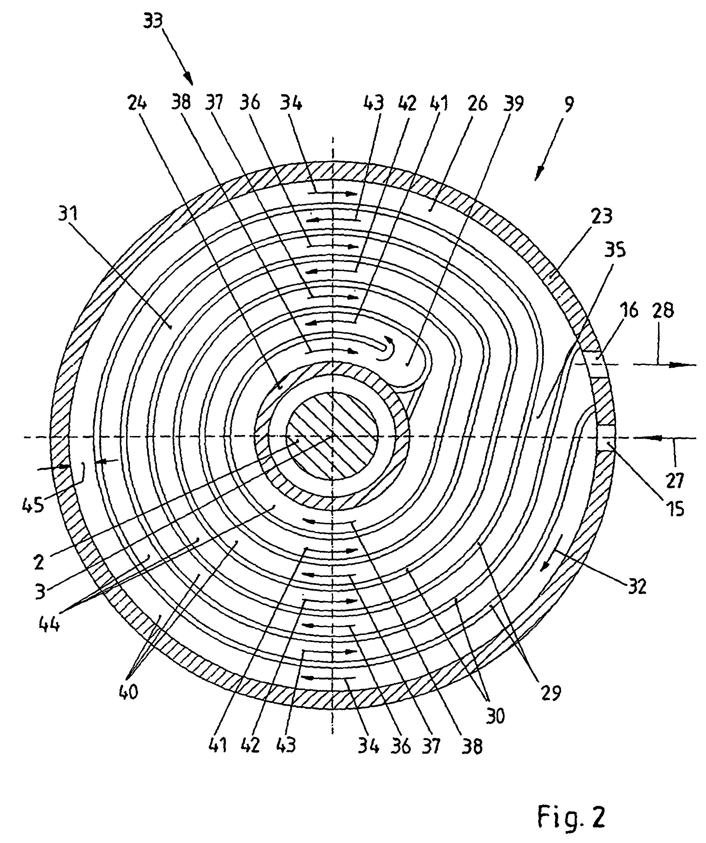

Figur 2 zeigt einen schnittgemäß der Linie II-II in Figur 1, also eine Draufsicht auf die Gestaltung der Kammer 9, die von dem Temperiermedium des Kreislaufes 17 durchflossen wird. Die Kammer 9 weist eine Außenwandung 23 und eine Innenwandung 24 auf. Ansonsten ist die Kammer durch zwei Kühlwände 25 und 26 geschlossen. Durch die Kühlwände 25 und 26 findet der Wärmeaustausch zu der Masse statt. In der Außenwandung 23 ist der Eingang 15 und der Ausgang 16 vorgesehen. Das Temperiermedium des Kreislaufes 17 strömt gemäß Pfeil 27 in den Innenraum der Kammer 9 ein. Das Temperiermedium verläßt den Innenraum der Kammer 9 gemäß Pfeil 28 über den Ausgang 16. Wenn es sich bei der Kammer 9 um eine Kühlkammer handelt, also eine Kammer, mit der die Masse gekühlt werden soll, besitzt das Temperiermedium des Kreislaufes 17 am Eingang 15 eine vergleichsweise niedrige Temperatur. Dieses Temperiermedium wird bei Durchlauf durch die Kammer 9 Wärme aus der Masse durch die Kühlwände 25 und 26 hindurch aufnehmen und am Ausgang 16 mit einer vergleichsweise erhöhten Temperatur austreten. Die umgekehrten Temperaturverhältnisse ergeben sich zum Beispiel bei einer Kammer 9, die in der Nachwärmzone angeordnet ist. Hier wird mittels des Temperiermediums Wärme auf die Masse übertragen, so daß sich die Temperatur des Temperiermediums beim Durchlauf durch die Kammer 9 vergleichsweise erniedrigt.

Die von den beiden Kühlwänden 25 und 26 sowie der Außenwandung 23 und der Innenwandung 24 begrenzte Kammer 9 ist durch zwei Trennwände 29 und 30 unterteilt. Die Trennwände 29 und 30 gehen über die Höhe der Kammer 9 (Figur 1) durch. Die beiden Trennwände 29 und 30 sind spiralisch mit jeweils gleichem Abstand zueinander angeordnet und erstrecken sich über die gesamte Fläche 31 der Kammer 9. Damit wird ein eindeutig festgelegter Strömungspfad 32 zwischen den Trennwänden 29 und 30 bzw. auch in Verbindung mit der Außenwandung 23 und der Innenwandung 24 geschaffen, durch den das Temperiermedium über die Fläche 31 der Kammer 9 gezielt verteilt geleitet wird. Die Trennwände 29 und 30 bilden eine zweigängige Einfachspirale 33. Das am Eingang 15 einströmende Temperiermedium bewegt sich zunächst im Rechtsdrehsinn gemäß Pfeil 34 auf relativ großem Radium bzw. Durchmesser um etwa 360 ° konzentrisch um die Achse 3, tritt in einem Übergangsbereich 35 auf einen kleinen Radius über, um wiederum nun auf etwas kleinerem Radius etwa 360 ° zu durchlaufen. Dieser Vorgang wiederholt sich noch zweimal gemäß den Pfeilen 37 und 38, bis das Temperiermedium schließlich eine radial innen angeordnete Umlenkung 39 erreicht, an der es bzw. der Strömungspfad 32 seine Richtung um 180 ° ändert. Dieser Teil des Strömungspfades 32, der sich gemäß den Pfeilen 34, 36, 37 und 38 radial gesehen von außen nach innen bis zu der Umlenkung 39 erstreckt, wird als Vorlauf 40 bezeichnet. Zwischen der Umlenkung 39 und dem Ausgang 16 verläuft der Strömungspfad 32 im Linksdrehsinn. Die Richtung des Strömungspfades 32 wird durch die Pfeile 41, 42 und 43 wiedergegeben. Dieser Teil des Strömungspfades 32, der sich im Linksdrehsinn von innen nach außen ergibt, wird als Rücklauf 44 bezeichnet.

Die Trennwände 29 und 30 sind über den Radius der Fläche 31 verteilt auf gleichem gegenseitgem Abstand angeordnet, so daß der Strömungspfad 32 an jeder Stelle eine gleich große Durchtrittsfläche 45 aufweist. Dies zielt darauf ab, an allen Stellen des Strömungspfades 32 gleiche Geschwindigkeit des Temperiermediums aufrecht zu erhalten. Geringfügige Abweichungen ergeben sich lediglich im Übergangsbereich 35, wobei durch die Ausbildung und Anordnung der Trennwände 29 und 30 an dieser Stelle möglichst konstante Verhältnisse hinsichtlich der Durchströmfläche 45 über den gesamten Strömungspfad erreicht werden.

Diese besondere Unterteilung der Kammer 9 bzw. die Anordnung der Trennwände 29 und 30 in Form der zweigängigen Einfachspirale 33 zielt darauf ab, an allen Stellen der Kühlwände 25 und 26, also über alle Stellen der Fläche 31 der Kammer 9 hinweg gleiche Temperatur zu erreichen, um die Masse in möglichst optimaler Weise zu kühlen oder zu erwärmen und örtliche Unterkühlungen bzw. Überhitzungen über die Fläche 31 zu vermeiden. Besonders bedeutungsvoll ist dies für die Einhaltung konstanter Kühlflächentemperaturen in der Vorkristallisationszone einer solchen Temperiersäule 1. Die Anzahl und die Modifikation der sich dabei bildenden Kristalle ist in starkem Maße davon abhängig, ob es gelingt die der Masse zugekehrte Oberflächentemperatur der Kühlwände 25 und 26 an allen Stellen über die Fläche 31 bzw. den Radius konstant zu halten. Dies wird durch die gezeigte Ausbildung und Anordnung des Strömungspfades 32 erreicht. Betrachtet man beispielsweise die Stelle, die durch die Pfeile 34 und 43 gekennzeichnet ist, dann erkennt man, bei einer in einer Kühlzone oder Kristallisationszone angewendeten Kammer 9, daß hier das Kühlmedium gemäß Pfeil 34 noch eine relativ niedrige Temperatur aufweist, weil es am Eingang 15 mit der niedrigsten Temperatur eingetreten ist und sich lediglich über einen Strömungsweg von 90 ° geringfügig erwärmen konnte. Benachbart zu dem Pfeil 34 strömt das Kühlmedium gemäß Pfeil 43 durch den Rücklauf 44. An dieser Stelle, also gegen Ende des Rücklaufes 44 hat sich das Kühlmedium bereits sehr weitgehend erwärmt. Die Temperatur liegt nur noch geringfügig unterhalb der Temperatur des Kühlmediums am Ausgang 16. Dies bedeutet, daß die Temperatur des Kühlmediums an der Stelle des Pfeils 34 und an der Stelle des Pfeils 43 zwar relativ weit auseinanderliegt. Im Mittel aber ergibt sich an der Kühlwandung 25 bzw. der Kühlwandung 26 eine aus diesen beiden Temperaturen gemittelte Temperatur, eine sogenannte Mitteltemperatur. Der Temperaturausgleich erfolgt durch die Masse bzw. über die Masse der Kühlwand 25 bzw. 26.

Der gleiche Vorgang findet an allen anderen Stellen über die Fläche 31 statt. Betrachtet man beispielsweise einen radial weiter innen liegenden Ort, beispielsweise dort, wo benachbart der Strömungspfad 32 durch die Pfeile 38 und 41 gekennzeichnet ist, dann ergibt sich hier zwar auch eine örtliche Temperaturdifferenz des Temperiermediums an der Stelle des Pfeiles 38 relativ zu der Stelle des Pfeiles 41. Aber auch hier mittelt sich die Temperatur im Bereich der Masse der Kühlwand 5 bzw. 26. Als Ergebnis dieser Temperaturmittelung entsteht die gleiche Mitteltemperatur, wie dies anhand des örtlichen Bereiches bezüglich der Pfeile 34 und 43 oben erläutert wurde. Als Gesamtergebnis läßt sich festhalten, daß sich benachbarte Strömungspfade bzw. Abschnitte von Strömungspfade temperaturmäßig an der Kühlwand 25 bzw. 26 so ausgleichen, daß an allen Stellen über den Radius und der Fläche 31 die gleiche betragsmäßig übereinstimmende Mitteltemperatur erreicht wird.

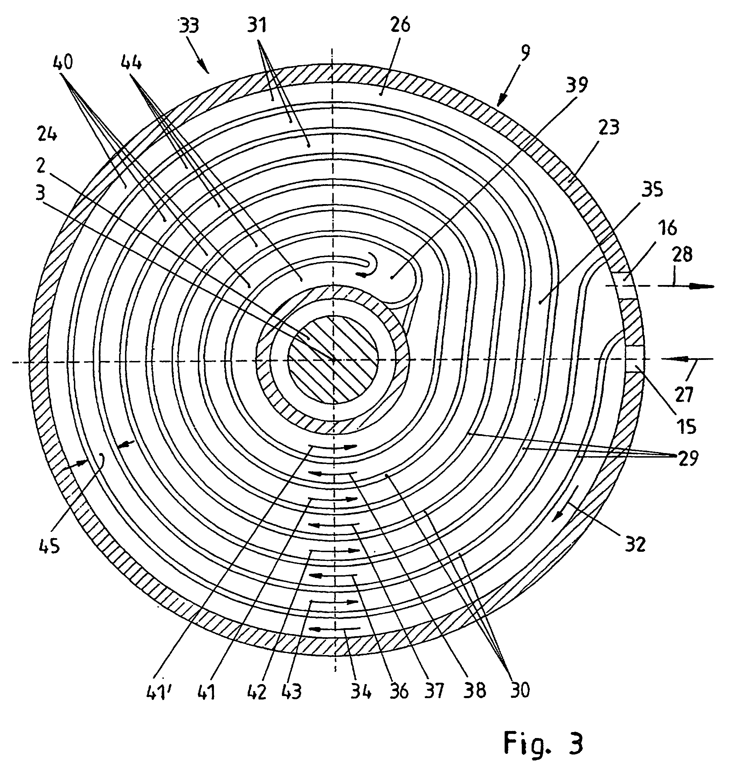

Figur 3 zeigt eine zweite Ausführungsform, ähnlich Figur 2. Auf die diesbezügliche Beschreibung der Figur 2 kann insoweit hingewiesen werden. Die Ausführungsform gemäß Figur 3 weist die Besonderheit auf, daß der Vorlauf 40 und der Rücklauf 44 etwa gleich land ausgebildet sind. Man kann sich den Strömungspfad 32 an einem Ersatzbild in Form eines Wasserschlauches vorstellen. Die beiden Enden des Schlauches stellen den Eingang 16 und den Ausgang 17 dar. Der Schlauch ist U-förmig mit nebeneinander angeordneten Schenkeln so ausgelegt, daß er am anderen Ende zu dem benachbarten Eingang 15 und Ausgang 16 die Umkehrung 39 aufweist. Ein solcher Schlauch ist dann spiralförmig um die Achse 3 herum aufgewickelt, so daß damit das in Figur 3 erkennbare Sinnbild der Einfachspirale 33 entsteht. Der Vorlauf 40 entspricht der einen Schenkellänge. Der Rücklauf 44 entspricht der anderen Schenkellänge. Vorlauf und Rücklauf sind gemäß Figur 3 gleich. Bei der Ausführungsform gemäß Figur 2 hingegen ist der Vorlauf 40 etwas länger ausgebildet als der Rücklauf 44, weil der Strömungspfad 32 hier eine ungerade Anzahl von bogenförmigen Abschnitten aufweist. Bei der Ausführungsform gemäß Figur 3 ist eine gerade Anzahl von bogenförmigen Abschnitten vorhanden. Der zusätzliche Abschnitt ist durch Pfeil 41' gekennzeichnet.

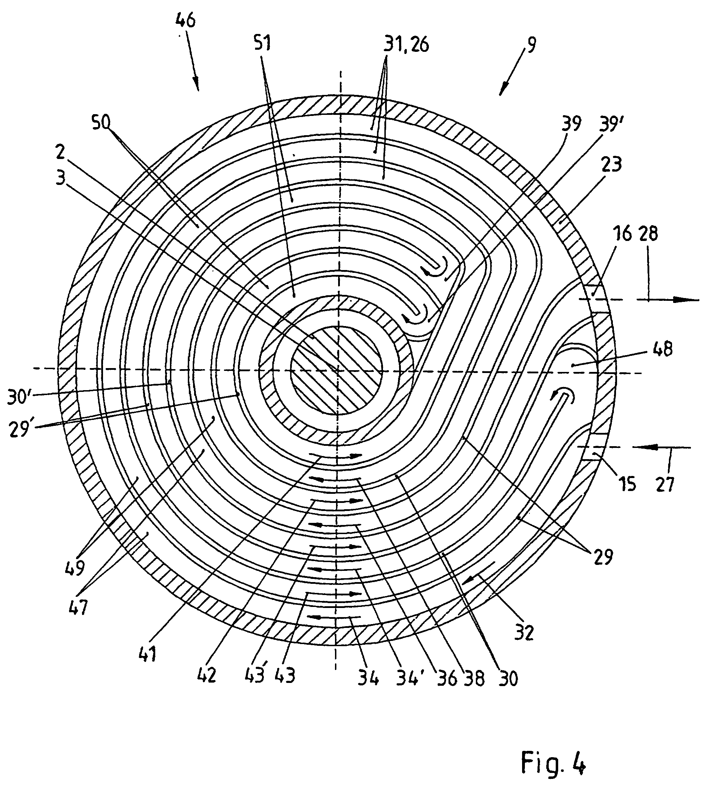

Die Ausführungsform der Kammer 9 gemäß Figur 4 stellt eine Doppelspirale 46 dar. Als Ersatzschaubild kann man sich zwei U-förmig abgeknickte und nebeneinandergelegte Wasserschläuche vorstellen, die gemeinsam spiralisch um die Achse 3 aufgewickelt sind. Auch hier tritt das Temperiermedium durch den Eingang 15 ein und folgt einem Strömungspfad 32, gemäß dem es entsprechend Pfeil 34 um etwa 360 ° kreisförmig geführt wird. Sodann tritt das Temperiermedium jedoch auf einen anderen Radius über und erfolgt gemäß Pfeil 36 einer weiteren Umfangslinie um weniger als 360 °, bis es zu der ersten Umlenkung 39 gelangt. Dieser Weg bildet einen ersten Abschnitt 47 des Vorlaufes 40. Ausgehend von der Umlenkung 39 folgt dann das Temperiermedium den Pfeilen 42 und 43 bis es zu einer am äußeren Radius vorgesehenen Umlenkung 48 gelangt, bei der das Temperiermedium seine Richtung um 180 ° ändert. Dieser Teil des Strömungspfades 32 zwischen den Umlenkungen 39 und 48 wird als erster Abschnitt 49 des Rücklaufes 44 bezeichnet. Die Umlenkung 48 ist im inneren des scheibenförmigen Körpers, also innerhalb der Außenwandung 23 vorgesehen. Es ist leicht vorstellbar, daß die Umlenkung 48 auch außerhalb der Außenwandung 23 vorgesehen sein könnte.

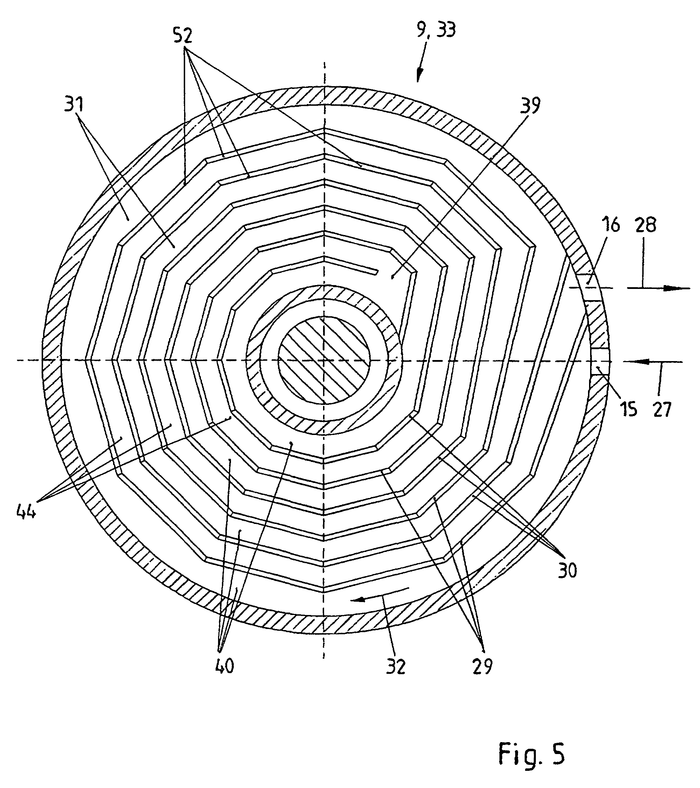

Beginnend an der Umlenkung 48 folgt der Strömungspfad 32 zunächst dem Pfeil 34' und dann dem Pfeil 38 bis zu einer Umlenkung 39', die radial innen und benachbart zu der Umlenkung 39 vorgesehen ist. Dieser Teil des Strömungspfades 32 zwischen der Umlenkung 48 und der Umlenkung 39' wird als zweiter Abschnitt 50 des Vorlaufes 40 bezeichnet. Der Vorlauf 40 besteht also bei dieser Ausführungsform aus den Abschnitten 47 und 50. Schließlich erstreckt sich noch zwischen der Umlenkung 39' und dem Ausgang 16 entsprechend den Pfeilen 41 und 43' ein zweiter Abschnitt 51, der zu dem Rücklauf 44 gehört, weil auch hier das Temperiermedium radial von innen nach außen strömt. Auch bei dieser Ausführungsform ergibt sich an allen Stellen über die Fläche 31 der Kammer 9 bzw. der Kühlwände 25 bzw. 26 die schon oben beschriebenen Mitteltemperatur. Die Trennwände 29 und 30 gemäß den Ausführungsbeispielen der Figuren 2 und 3 sowie die Trennwände 29, 29', 30, 30' gemäß Figur 4 sind im wesentlichen kreisförmig ausgebildet und angeordnet. Bei der Ausführungsform gemäß Figur 5 sind die Trennwände 29 und 30 aus geradlinig verlaufenden Wandungsabschnitten 52 polygonartig zusammengesetzt. Ansonsten entspricht diese Ausführungsform denjenigen der Figur 2. Auch bei dieser Ausführungsform stellt sich an allen Stellen über den Radius und den Umfang der Fläche 31 verteilt die gleiche Mitteltemperatur ein.

### BEZUGSZEICHENLISTE

- 1 -: Temperiersäule
- 2 -: Antriebswelle
- 3 -: Achse
- 4 -: Motor
- 5 -: Getriebe
- 6 -: Bodenplatte
- 7 -: Deckplatte
- 8 -: Massekammer
- 9 -: Kammer
- 10 -: Pumpe

- 11 -: Leitung
- 12 -: Masseauslaß
- 13 -: Pfeil
- 14 -: Rührwerkzeug
- 15 -: Eingang
- 16 -: Ausgang
- 17 -: Kreislauf
- 18 -: Pumpe
- 19 -: Mischbehälter
- 20 -: Leitung

- 21 -: Pfeil
- 22 -: Leitung
- 23 -: Außenwandung
- 24 -: Innenwandung
- 25 -: Kühlwand
- 26 -: Kühlwand
- 27 -: Pfeil
- 28 -: Pfeil
- 29 -: Trennwand
- 30 -: Trennwand

- 31 -: Fläche
- 32 -: Strömungspfad
- 33 -: Einfachspirale
- 34 -: Pfeil
- 35 -: Übergangsbereich
- 36 -: Pfeil
- 37 -: Pfeil
- 38 -: Pfeil
- 39 -: Umlenkung
- 40 -: Vorlauf

- 41 -: Pfeil
- 42 -: Pfeil
- 43 -: Pfeil
- 44 -: Rücklauf
- 45 -: Durchtrittsfläche
- 46 -: Doppelspirale
- 47 -: Abschnitt
- 48 -: Umlenkung
- 49 -: Abschnitt
- 50 -: Abschnitt

- 51 -: Abschnitt
- 52 -: Wandungsabschnitt

## Patentansprüche

1. Vorrichtung zum kontinuierlichen Temperieren von zu verarbeitenden kakaobutterhaltigen oder ähnlichen fetthaltigen Massen, insbesondere Schokolademasse, mit einer Temperiersäule (1), die mehrere, einen Zylinder bildende, übereinander angeordnete Kammern (9) aufweist, von denen mindestens eine an einen Kreislauf (17) für ein Temperiermedium angeschlossen ist und in dieser Kammer (9) zwischen einem außen an der Kammer angeordneten Eingang (15) und einem außen an der Kammer angeordneten Ausgang (16) durch eine Trennwand (29, 30) ein Strömungspfad (32) für das Temperiermedium gebildet ist, der mit einem von außen nach innen verlaufenden ersten Abschnitt des Strömungspfades (32) einen Vorlauf (40) und mit einem von innen nach außen verlaufenden weiteren Abschnitt des Strömungspfades (32) einen Rücklauf (44) bildet, **dadurch gekennzeichnet, dass** die Trennwand (29, 30; 29, 30, 29', 30') in der Kammer (9) so angeordnet ist, dass der Strömungspfad (32) eine zweigängige spiralartige Form erhält und die Abschnitte des Vorlaufes (40) und des Rücklaufes (44) des Strömungspfades (32) jeweils unmittelbar nebeneinander über die Fläche (31) der Kammer (9) verteilt angeordnet sind.

2. Vorrichtung nach Anspruch 1, **dadurch gekennzeichnet, dass** die beiden Abschnitte des den Vorlauf (40) und den Rücklauf (44) bildenden Strömungspfades (32) zumindest etwa gleich lang ausgebildet sind.

3. Vorrichtung nach Anspruch 1 oder 2, **dadurch gekennzeichnet, dass** die spiralartig verlaufende Trennwand (29, 30) der Kammer (9) unter Bildung einer weitgehend konstanten Durchströmfläche (45) für das Temperiermedium im Vorlauf (40) und im Rücklauf (44) über die Fläche (31) der Kammer (9) verteilt zwischen Eingang (15) und Ausgang (16) angeordnet ist.

4. Vorrichtung nach Anspruch 3, **dadurch gekennzeichnet, dass** die Trennwand (29, 30) unter Bildung einer zweigängigen Einfachspirale (33) mit einer einzigen innen angeordneten Umlenkung (39) über die Fläche (31) der Kammer (9) verteilt angeordnet sind.

5. Vorrichtung nach Anspruch 3, **dadurch gekennzeichnet, dass** die Trennwand (29, 30, 29', 30') unter Bildung einer Doppelspirale (46) mit zwei innen angeordneten Umlenkungen (39, 39') über die Fläche (31) der Kammer (9) verteilt angeordnet sind.

6. Vorrichtung nach Anspruch 4 oder 5, **dadurch gekennzeichnet, dass** die Trennwand (29, 30) als eine gerundet verlaufende Wandung ausgebildet ist.

7. Vorrichtung nach Anspruch 4 oder 5, **dadurch gekennzeichnet, dass** die Trennwand (29, 30) als eine polygonartig verlaufende Wandung ausgebildet ist.

8. Vorrichtung nach einem der Ansprüche 1 bis 7, **dadurch gekennzeichnet, dass** die Trennwand (29, 30) eine Vielzahl von kreisbogenartig um die Achse (3) der Temperiersäule (1) verlaufender Wandungsabschnitte (52) aufweist.

9. Vorrichtung nach einem der Ansprüche 1 bis 8, **dadurch gekennzeichnet, dass** die Trennwand (29, 30) so angeordnet ist, dass die Krümmung des Vorlaufes (40) und die Krümmung des Rücklaufes (44) abschnittweise im wesentlichen konstant bleiben und nur durch die Anordnung des Eingangs (15) und des Ausgangs (16) gestört sind.

10. Vorrichtung nach einem der Ansprüche 1 bis 9, **dadurch gekennzeichnet, dass** der Eingang (15) und der Ausgang (16) zu der Kammer (9) benachbart zueinander angeordnet sind.

## Claims

1. An apparatus for continuously tempering masses containing cocoa butter or similar fats, especially chocolate masses, comprising a tempering column (1) having a number of chambers (9) forming a cylinder and being arranged one above the other, at least one of the chambers being connected to a tempering circuit (17) for a tempering medium, in this chamber (9) a flowing path (32) for the tempering medium is formed between an entrance (15) being arranged at the periphery of the chamber and an exit (16) being arranged at the periphery of the chamber by a separating wall (29, 30), the flowing path (32) having a first forward portion (40) being directed from outside to inside and further a second return portion (44) directed from inside to outside, **characterized in that** the separating wall (29, 30; 29, 30, 29', 30') is designed and arranged inside the chamber (9), so that the flowing path (32) is a double-threaded spiral, and **in that** the sections of the forward portion (40) and of the return portion (44) of the flowing path (32) each are arranged directly side by side distributed over the surface (31) of the chamber (9).

2. Apparatus of claim 1, **characterized in that** the forward portion (40) and the return portion (44) of the flowing path (32) at least approximately have the same length.

3. Apparatus of claim 1 or 2, **characterized in that** the spiral-like separating wall (29, 30) of the chamber (9) having a cross-sectional area (45) for the tempering medium being approximately constant with respect to the forward portion (40) and the return portion (44) is arranged to be distributed over the surface (31) of the chamber (9) between the entrance (15) and the exit (16).

4. Apparatus of claim 3, **characterized in that** the separating wall (29, 30) forming a double-threaded single spiral (33) and including one single inner turning point (39) is arranged to be distributed over the surface (31) of the chamber (9).

5. Apparatus of claim 3, **characterized in that** the separating wall (29, 30, 29', 30') forming a double spiral (46) and including two inner turning points (39, 39') is arranged to be distributed over the surface (31) of the chamber (9).

6. Apparatus of claim 4 or 5, **characterized in that** the separating wall (29, 30) has a round-like shape.

7. Apparatus of claim 4 or 5, **characterized in that** the separating wall (29, 30) has a polygon-like shape.

8. Apparatus of one of the claims 1 to 7, **characterized in that** the separating wall (29, 30) includes a number of wall portions (52) being arranged in form of a circular arc around the axis (3) of the tempering column (1).

9. Apparatus of one of the claims 1 to 8, **characterized in that** the separating wall (29, 30) is arranged so that the curvature of the forward portion (40) and the curvature of the return portion (44) with respect to sections is substantially constant except by the arrangement of the entrance (15) and the exit (16).

10. Apparatus of one of the claims 1 to 9, **characterized in that** the entrance (15) and the exit (16) of the chamber (9) are arranged close to one another.

## Revendications

1. Appareil pour le conditionnement thermique continu de masses au beurre de cacao ou autres graisses analogues en vue de leur mise en oeuvre, en particulier d'une masse de chocolat, avec une colonne de conditionnement thermique (1) qui présente plusieurs chambres (9) disposées les unes au-dessus des autres, formant un cylindre, dont au moins une est connectée à un circuit (17) destiné à un fluide de conditionnement thermique et dans laquelle, entre une entrée (15) disposée à l'extérieur de la chambre et une sortie (16) disposée à l'extérieur de la chambre est formé par une paroi de séparation (29, 30) dans la chambre (9) un chemin d'écoulement (32) pour le fluide de conditionnement thermique qui forme avec une première section du chemin d'écoulement (32) courant de l'extérieur vers l'intérieur un conduit d'alimentation (40) et avec une autre section du chemin d'écoulement (32) courant de l'intérieur vers l'extérieur un conduit de récupération (44), **caractérisé en ce que** la paroi de séparation (29, 30; 29, 30, 29', 30') est disposée de telle sorte dans la chambre (9) que le chemin d'écoulement (32) a une forme de spirale à enroulement double et les sections du conduit d'alimentation (40) et du conduit de récupération (44) du chemin d'écoulement (32) sont disposées directement les unes à côté des autres sur la surface (31) de la chambre (9).

2. Appareil selon la revendication 1, **caractérisé en ce que** les deux sections du chemin d'écoulement (32) constitué du conduit d'alimentation (40) et du conduit de récupération (44) sont au moins de longueur à peu près égale.

3. Appareil selon la revendication 1 ou 2, **caractérisé en ce que** la paroi de séparation spiralée (29, 30) de la chambre (9) est répartie sur la surface (31) de la chambre (9) entre l'entrée (15) et la sortie (16) en formant une surface de circulation (45) sensiblement constante pour le fluide de conditionnement thermique dans le conduit d'alimentation (40) et le conduit de récupération (44).

4. Appareil selon la revendication 3, **caractérisé en ce que** la paroi de séparation (29, 30) est répartie sur la surface (31) de la chambre (9) en formant une spirale simple à enroulement double (33) avec un seul coude (39) disposé à l'intérieur.

5. Appareil selon la revendication 3, **caractérisé en ce que** la paroi de séparation (29, 30, 29', 30') est répartie sur la surface (31) de la chambre (9) en formant une spirale double (46) avec deux coudes (39, 39') disposés à l'intérieur.

6. Appareil selon la revendication 4 ou 5, **caractérisé en ce que** la paroi de séparation (29, 30) est configurée comme une paroi ronde.

7. Appareil selon la revendication 4 ou 5, **caractérisé en ce que** la paroi de séparation (29, 30) est configurée comme une paroi polygonale.

8. Appareil selon une des revendications 1 à 7, **caractérisé en ce que** la paroi de séparation (29, 30) présente une multitude de sections de paroi (52) courant en arc de cercle autour de l'axe (3) de la colonne de conditionnement thermique (1).

9. Appareil selon une des revendications 1 à 8, **caractérisé en ce que** la paroi de séparation (29, 30) est disposée de telle sorte que la courbure du conduit d'alimentation (40) et la courbure du conduit de récupération (44) restent sensiblement constantes par section et ne sont perturbées que par la disposition de l'entrée (15) et de la sortie (16).

10. Appareil selon une des revendications 1 à 9, **caractérisé en ce que** l'entrée (15) et la sortie (16) de la chambre (9) sont disposées l'une à côté de l'autre.
